# EUROPEAN PATENT SPECIFICATION

(11) **EP 1 227 956 B1**
(45) Date of publication and mention of the grant of the patent: **18.05.2005**
(21) Application number: 00973074.8
(22) Date of filing: 08.11.2000
(51) Int. Cl.: B60R 21/34, B60R 21/01

(54) **PEDESTRIAN IMPACT PROTECTION**
FUSSGÄNGERAUFPRALLSCHUTZ
PROTECTION DES PIETONS CONTRE LES CHOCS

(30) Priority: 08.11.1999 GB 9926270
(43) Date of publication of application: 07.08.2002
(73) Proprietor: Ford Motor Company Limited, Brentwood, Essex CM13 3BW (GB); Groupe Ford France S.A., 92506 Rueil Malmaison Cedex (FR); Ford-Werke Aktiengesellschaft, 50735 Köln (DE)
(72) Inventor: STAINES, Bradley, Essex SS7 4AD (GB)
(74) Representative: Messulam, Alec Moses
(86) International application number: PCT/GB2000/004263
(87) International publication number: WO 2001/034438

(56) References cited:
- EP-A- 0 937 612
- PATENT ABSTRACTS OF JAPAN vol. 1999, no. 05, 31 May 1999 (1999-05-31) & JP 11 028994 A (NISSAN MOTOR CO LTD), 2 February 1999 (1999-02-02)

## Description

This invention relates to a pedestrian protection method and apparatus for use with a motor vehicle, in particular a motor car.

When a motor vehicle collides with a pedestrian, it is possible to reduce the severity of the injuries suffered by the pedestrian through the use of exterior air bags or other exterior cushioning mechanisms which can be deployed upon receiving a signal from one or more pedestrian impact sensors mounted towards the front of the vehicle.

It is known from patent document WO 97/18108 to distinguish between a pedestrian and a non-pedestrian collision. However, this document describes a system in which a trigger signal is sent to a pedestrian cushioning device if a pedestrian collision is sensed, with the result that the cushioning device is deployed independently of the type of pedestrian collision that has occurred.

It is further disclosed in EP-A-0937612 (preamble of Claim 1 resp. claim 11) to provide a collision discriminating apparatus in which deployment of a pedestrian protection device is delayed by an amount which varies with the speed of the vehicle.

It is an object of the present invention to address these issues.

According to the a first aspect of the present invention, there is provided a pedestrian protection method for a motor vehicle having a pedestrian protection device in the form of an airbag comprising the steps of: receiving one or more impact signals from one or more impact sensors; receiving one or more vehicle parameter signals from one or more vehicle parameter sensors; calculating impact parameters from the received signals using reference data stored in a memory; determining if the impact parameters are indicative of a pedestrian impact and, if so, issuing control instructions for activating the pedestrian protection device, wherein the control instructions are a function of the calculated impact parameters and include a delay command which varies with vehicle speed to delay the activation of the pedestrian protection device wherein characterised in that the pedestrian protection device is deployed at a first rate when the vehicle speed is above a first speed threshold but below a second speed and is deployed at a faster rate when the vehicle speed is above the second speed but below a third speed threshold.

The reference data stored in the memory may include the first speed threshold below which the pedestrian protection device is not activated and the third speed threshold above which the pedestrian protection device is not activated so that the pedestrian protection device is only activated when the vehicle speed is between the first and second speed thresholds and the other impact parameters are indicative of a pedestrian impact.

The second speed may be the vehicle speed where the delay period is shorter than the time that would otherwise be required for the impact protection device to be fully deployed at the first rate of deployment.

The delay may decrease with vehicle speed for the first inflation rate between the first speed threshold and the second speed and the delay decreases with vehicle speed for the higher inflation rate from the second speed to the third threshold speed. The impact parameters may be calculated using an algorithm involving the comparison of values, interpolating between values, changing the memory location of a value or other steps that do not necessarily involve addition or multiplication.

In the present invention the calculated impact parameters may be indicative of the type of impact that has occurred.

Preferably, a signal may be received from at least one impact sensor mounted on the front bumper of the vehicle, so as to improve the sensitivity of the sensor to a collision involving a pedestrian. Other impact sensors may also be mounted at different locations on the vehicle body to provide further information.

The vehicle parameter sensor or sensors may comprise a speed sensor so that a speed signal can be received to indicate the speed at which the vehicle is travelling immediately prior to the collision.

The information on the change in vehicle speed during an impact may be received by a crash sensor.

At least one impact signal received may be time dependent. The impact signals received will preferably be time dependent since certain types of impacts will produce a distinctive time dependent impact signal.

At least one impact parameter may be calculated by comparing a time dependent impact signal with received time dependent impact signals stored in the memory.

One or more look-up tables may be used in determining a functional relationship between the calculated impact parameters and the control instructions for activating the impact protection device. So that the stored data can be compared to the received time dependent impact signals in order to calculate, by interpolation or otherwise, impact parameters that are more precisely indicative of the type of impact that has occurred.

Preferably, the reference data stored in the memory will be available in the form of a plurality of sets of look-up tables, each set corresponding to a vehicle parameter and the look-up tables within each set each corresponding to a different value of that parameter. Therefore when an impact is detected, and vehicle parameters are received, it will then be possible to compare the time dependent impact signal with the appropriate look-up table from each set, in order to calculate parameters that are yet more precisely indicative of the type of impact that has occurred.

According to a second aspect of the present invention, there is provided a pedestrian protection apparatus for a motor vehicle comprising a pedestrian protection device in the form of an airbag; one or more impact sensors; one or more vehicle parameter sensors; hardware having a memory containing reference data; and at least one microprocessor connected to the memory and said sensor, the microprocessor being capable of receiving input signals from said sensors, calculate impact parameters from the received input signals using the stored reference data, and if the impact parameters are deemed indicative of a pedestrian impact, to issue control instructions for activating the impact protection device, whereby the control instructions are a function of the calculated impact parameters and include a delay command which varies with vehicle speed to delay activation of the pedestrian protection device characterised in that the microprocessor is operable to deploy the pedestrian protection device at a first rate when the vehicle speed is above a first speed threshold but below a second speed and is deployed at a faster rate when the vehicle speed is above the second speed but below a third speed threshold.

The reference data includes the first speed threshold below which the pedestrian protection device is not activated and the third speed threshold above which the pedestrian protection device is not activated so that the microprocessor is only operable to issue control instructions for activating the pedestrian protection device when the vehicle speed is between the first and second speed thresholds and the other impact parameters are indicative of a pedestrian impact.

The second speed may be the vehicle speed where the delay period is shorter than the time that would otherwise be required for the impact protection device to be fully deployed at the first rate of deployment.

Preferably, the pedestrian protection apparatus will further comprise a restraints control module, the restraints control module being capable of calculating impact parameters in the event of an impact and assessing is if a pedestrian impact has occurred, and if it is deemed that a pedestrian impact has not occurred, preventing the deployment of the pedestrian protection device. Examples of non pedestrian collisions include collisions between two vehicles, and collisions with lamp posts or walls.

The invention will now be further described, by way of example, with reference to the accompanying drawings, in which:
Figure 1 shows a simplified functional block diagram for a pedestrian protection system according to the invention;
Figure 2 is a schematic graphical representation of a time dependent sensor signal Vs for two different pedestrian impacts;
Figure 3 is a schematic graphical representation of a time delay for pedestrian device deployment as a function of vehicle speed; and
Figure 4 shows a functional block diagram showing how the pedestrian protection system can function with a Restrains Control Module.

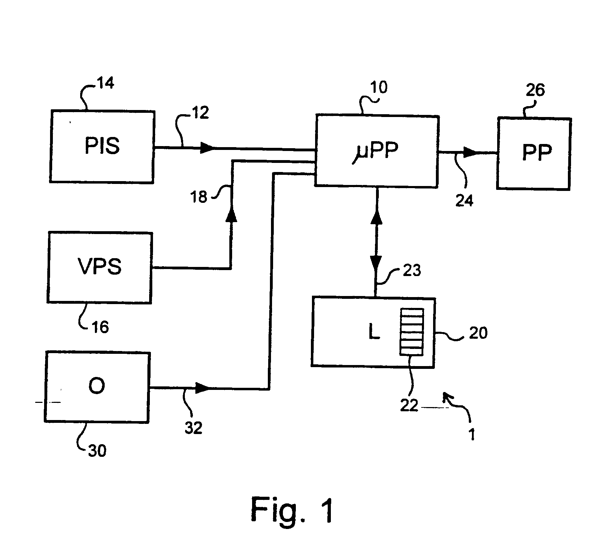

Figure 1 is a block diagram illustrating how a simplified pedestrian protection system 1 for a motor vehicle will function. The apparatus has a pedestrian microprocessor (µPP) 10 that can receive pedestrian impact signals 12 from a pedestrian impact sensor (PIS) 14 mounted on or close to the front bumper of the vehicle (not shown). The pedestrian microprocessor 10 also receives a continuously generated signal 18 indicative of the vehicle speed from a vehicle parameter sensor (VPS) 16. A memory location (L) 20 having plurality of look-up tables 22 with reference data can be accessed by the microprocessor 10 to store and retrieve data.

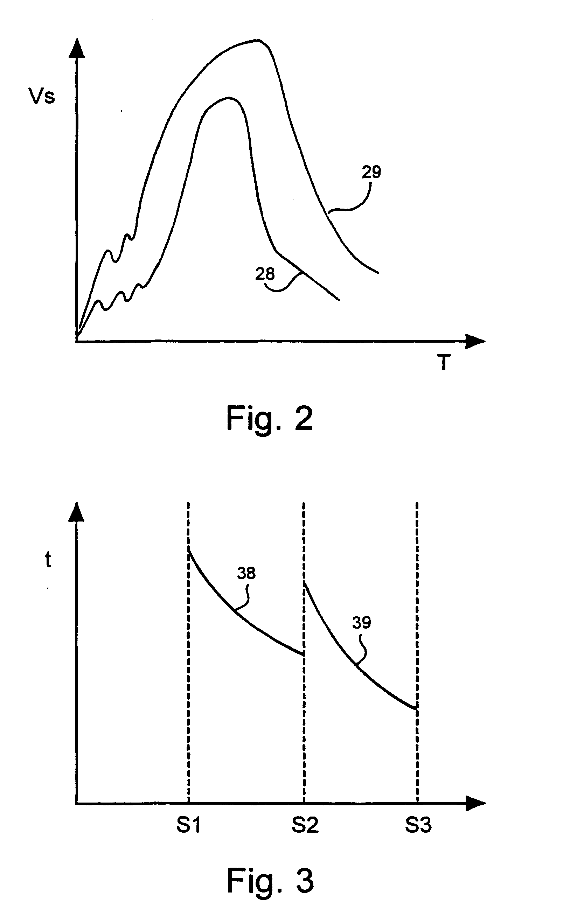

In the event of a collision, the pedestrian impact sensor 14 will produce an impact signal 12 that is time dependent. Hypothetical examples of such signals for two pedestrian impacts are shown in Figure 2, as traces 28,29. The traces 28,29 do not represent real data, but are for illustrative purposes only. A time dependent trace 28,29 will be analysed by the microprocessor 10 and compared with the reference data in the look-up tables 22, taking into account the vehicle speed signal produced by the vehicle parameter sensor 16, in order to calculate a plurality of impact parameters indicative of the type of impact that has occurred. If on the basis of this analysis, and the resulting impact parameters, the microprocessor 10 determines that a pedestrian impact has occurred, then the microprocessor will issue control instructions 24 to activate a pedestrian protection device 26.

The control instruction 24 that are issued depend on the calculated impact parameters and determine the manner and timing of the deployment of the pedestrian protection device 26. The impact parameters indicate the type of pedestrian impact that has occurred, so that the pedestrian protection device 26 can be activated in the most appropriate manner.

If the pedestrian protection device 26 is an air bag mounted on the bonnet of the vehicle, it may for example be advantageous for the control instructions 24 to include a time delay command so that once inflated, the air bag does not begin to deflate before being impacted by the pedestrian. The control instructions will also control the speed at which the air bag is deployed (for example by controlling the gas pressure as the air bag is being filled).

These considerations can best be understood with reference to Figure 3, which is a graph of time delay t before air bag deployment against vehicle speed S. The time delay t is the time interval between the time when the impact is sensed and time when the pedestrian air bag is deployed. The graph is divided into four regions separated by dashed lines at speed thresholds S1, S2 and S3.

In the event of a collision, the microprocessor 10 will calculate an impact parameter from the vehicle speed signal 18 and data in look-up tables containing amongst other things the speed thresholds S1-S3. When the vehicle is travelling at a speed below S1, deployment of the air bag is not necessary. Accordingly, the calculated impact parameter will result in a null control instruction being sent to the air bag so that it does not deploy. Similarly, the air bag will not be deployed at speeds greater than S3, since its deployment would be dangerous and of little use.

When the vehicle is travelling at a speed above S1 and below S3, it becomes necessary to deploy the air bag in the event of a pedestrian impact. Since the pedestrian will take a finite time to reach the air bag after the impact signal 12 from the impact sensor 14 has been received by the microprocessor 10, the deployment of the air bag 26 should be delayed by a time delay t.

The look-up tables 22 contain information such as the delay time as a function of vehicle speed, the delay time as a function of the impact sensor signal amplitude and other sensor signal characteristics, so that the microprocessor 10 can access and cross-reference data from these look-up tables 22 in order to calculate impact parameters indicative of the type of pedestrian impact deemed to have occurred. The required delay time t and the speed at which the air is deployed will then be calculated with the use of a further look-up table 22 relating the command instructions to the impact parameters.

As can be seen from trace 38 of Figure 3, the delay time decreases with vehicle speed since when the vehicle is travelling faster, the pedestrian is likely to come into contact with the air bag more quickly.

Above a speed S2 the required delay time is less than the minimum deployment time of the air bag, and so the air bag will be deployed at a higher rate (by increasing the gas pressure during inflation for example), and a further look-up table 22 containing new delay times will be accessed by the microprocessor 10 when the air bag is deployed at the higher rate.

Trace 39 indicates the expected delay time when the air bag is to be inflated at the higher rate. As with trace 38, the delay time in trace 39 decreases with increasing vehicle speed. For vehicle speeds close to speed S2, the delay time is greater when the air bag is to be deployed at the higher rate than when it is deployed at the at the lower rate.

The graph in Figure 3 is for a single type of impact where the characteristics of the impact are fixed. There will in practice be a whole range of different types of impact having different characteristics depending, for example, on the position of the point or points of impact relative to the vehicle and the pedestrian, as well as the weight and shape of the pedestrian. Thus the memory location 20 will contain additional look-up tables where the delay time t, the threshold velocities S1-S3 and the rate of deployment is predetermined as a function of these different impact characteristics.

To obtain information on the type of impact that has occurred, the microprocessor analyses the time dependence of the impact signal 12. Some types of collisions will produce a distinctive trace indicative of that type of collision. The look-up tables 22 will contain reference data on such collisions, enabling the microprocessor 10 to determined what type of collision has occurred by comparing and/or interpolating the measured signal 12 with the reference data.

The traces 28 and 29 in Figure 2 of hypothetical impact signals may represent impacts with pedestrians of different weight. Both traces 28,29 show the same characteristic structure including a main peak, with trace 28 being shifted to higher signal strength with respect to trace 29.

In addition to the vehicle speed, the look-up tables 22 may also comprise data as a function of other vehicle parameters such as the engine speed, the ratio of the engaged gear, the angular position of the steering wheel the extent to which the brakes are being applied and other dynamic and/or functional parameters relating to the vehicle. Such parameters may be measured by other sensors (O) 30 that supply other sensor signals 32 to the microprocessor 10.

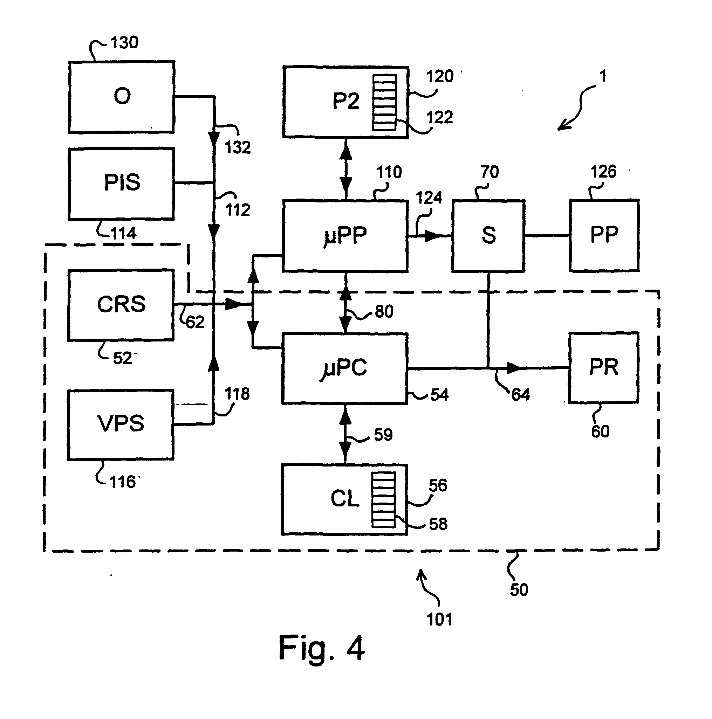

Figure 4 shows how in a preferred embodiment of the invention a pedestrian protection system 101 can include a Restrains Control Module (RCM) 50 of the motor vehicle. In Figure 4, components corresponding to those in Figure 1 use reference numerals incremented by one hundred.

The RCM 50 shown within the dashed line of Figure 4 comprises at least one crash sensor 52 (CRS), a crash microprocessor 54 (µPC), a memory location (CL) for crash look-up table data 58 and passenger restraints 60 (PR). In the event of an impact, whether with a pedestrian or not, the crash sensor 52 sends a crash signal 62 to the crash microprocessor 54 which accesses 59 data in the memory location 56 to determine whether or not a (non pedestrian) crash has occurred, and if so, to activate the passenger restraints 60 with a restraints activation signal 64.

In this embodiment, the RCM 50 is adapted to function with the pedestrian protection system 101. If the crash microprocessor 54 deems that a crash has occurred, the restrains activation signal 64 will be passed to a failsafe feature 70 that prevents the pedestrian protection device 126 from being activated.

The crash signal 62 from the crash sensor 52 is also passed to the pedestrian microprocessor 110. Since the crash sensor 52 is normally an accelerometer mounted towards the front of the vehicle but rearward of the pedestrian impact sensor 114, it will provide additional information to the pedestrian microprocessor 110. Likewise, to provide additional information to the crash microprocessor 54 (such as the of first contact), the pedestrian impact signal is passed to the crash microprocessor 54 as well as the pedestrian microprocessor 110.

Other vehicle parameters 132 as described above, from sensors designated 130, are passed to both the pedestrian microprocessor 110 and the crash microprocessor 54 and are used by each microprocessor 54,110 to determine the impact parameters indicative of the type of collision that has occurred.

In the embodiment shown in Figure 4, the crash microprocessor 54 uses reference data 58 in the memory location 56 to determine the severity of a crash, whilst the pedestrian microprocessor 110 uses data 122 in the memory location 120 to determine if a pedestrian collision has occurred and to classify the severity/type of pedestrian collision.

In Figure 4 the pedestrian microprocessor 110 and the crash microprocessor 54 communicate via a bus 80, but the functions of these separate microprocessors 54,110 may be combined within a single processor. Similarly, the memory locations 56 and 120 may also be combined.

Thus the invention provides an improved method and apparatus for the control of passenger protection devices, and can conveniently be used alongside or with an existing passenger restraint system.

## Claims

1. A pedestrian protection method for a motor vehicle having a pedestrian protection device (26, 126) in the form of an airbag comprising the steps of: receiving one or more impact signals (12,112,62) from one or more impact sensors (14,114,52); receiving one or more vehicle parameter signals (18,118,32,132) from one or more vehicle parameter sensors (16,116,30,130); calculating impact parameters from the received signals (12,112,18,118, 32,132,62) using reference data stored in a memory; determining if the impact parameters are indicative of a pedestrian impact and, if so, issuing control instructions (24,124) for activating the pedestrian protection device (26,126), wherein the control instructions (24,124) are a function of the calculated impact parameters and include a delay command which varies with vehicle speed to delay the activation of the pedestrian protection device (26,126) **characterised in that** the pedestrian protection device (26, 126) is deployed at a first rate when the vehicle speed is above a first speed threshold (S1) but below a second speed (S2) and is deployed at a faster rate when the vehicle speed is above the second speed (S2) but below a third speed threshold (S3).

2. A pedestrian protection method as claimed in Claim 1 wherein reference data stored in the memory includes the first speed threshold (S1) below which the pedestrian protection device (26,126) is not activated and the third speed threshold (S3) above which the pedestrian protection device (26,126) is not activated so that the pedestrian protection device (26,126) is only activated when the vehicle speed is between the first and second speed thresholds (S1, S3) and the other impact parameters are indicative of a pedestrian impact.

3. A pedestrian protection method as claimed in Claim 1 or in Claim 2 wherein the second speed (S2) is the vehicle speed where the delay period is shorter than the time that would otherwise be required for the impact protection device (26,126) to be fully deployed at the first rate of deployment.

4. A pedestrian protection method as claimed in any of Claims 1 to 3 wherein the delay decreases with vehicle speed for the first inflation rate between the first speed threshold (S1) and the second speed (S2) and the delay decreases with vehicle speed for the higher inflation rate from the second speed (S2) to the third threshold speed(S3).

5. A pedestrian protection method as claimed in any of Claims 1 to 4 wherein an impact signal (12,112,62) is received from at least one impact sensor (14,114) mounted on the front bumper of the vehicle.

6. A pedestrian protection method as claimed in any of Claims 1 to 5 wherein a speed signal (18) is received from a speed sensor to indicate the speed at which the vehicle is travelling immediately prior to the collision.

7. A pedestrian protection method as claimed in any preceding claim, wherein information on the change in vehicle speed during an impact is received by a crash sensor (30, 130).

8. A pedestrian protection method as claimed in any preceding claim, wherein at least one impact signal received (12,112,18,118,32,132,62) is time dependent.

9. A pedestrian protection method as claimed in Claim 8 wherein at least one impact parameter is calculated by comparing a time dependent impact signal with received time dependent impact signals stored in the memory.

10. A pedestrian protection method as claimed in claim 9 wherein one or more look-up tables (22, 58) are used in determining a functional relationship between the calculated impact parameters and the control instructions for activating the impact protection device (26,126).

11. A pedestrian protection apparatus (1) for a motor vehicle comprising: a pedestrian protection device (26, 126) in the form of an airbag; one or more impact sensors (14,114,52); one or more vehicle parameter sensors (16,116,30,130); hardware having a memory (20,120,26) containing reference data (22,122,58); and at least one microprocessor (10,110, 54) connected to the memory (20,120,26) and said sensors (14,114,52,16,116,30,130), the microprocessor (10,110,54) being capable of receiving input signals from said sensors, calculate impact parameters from the received input signals using the stored reference data, and if the impact parameters are deemed indicative of a pedestrian impact, to issue control instructions for activating the impact protection device (26,126), whereby the control instructions are a function of the calculated impact parameters and include a delay command which varies with vehicle speed to delay activation of the pedestrian protection device **characterised in that** the microprocessor (10, 110) is operable to deploy the pedestrian protection device (26,126) at a first rate when the vehicle speed is above a first speed threshold (S1) but below a second speed (S2) and is deployed at a faster rate when the vehicle speed is above the second speed (S2) but below a third speed threshold (S3).

12. A pedestrian protection apparatus as claimed in Claim is 11 wherein the reference data includes the first speed threshold (S1) below which the pedestrian protection device (26,126) is not activated and the third speed threshold (S3) above which the pedestrian protection device (26,126) is not activated so that the microprocessor (10, 110,54) is only operable to issue control instructions for activating the pedestrian protection device (26,126) when the vehicle speed is between the first and second speed thresholds (S1, S3) and the other impact parameters are indicative of a pedestrian impact.

13. A pedestrian protection apparatus as claimed in Claim 11 or in Claim 12 wherein the second speed (S2) is the vehicle speed where the delay period is shorter than the time that would otherwise be required for the impact protection device (26,126) to be fully deployed at the first rate of deployment.

## Patentansprüche

1. Fußgängerschutzverfahren für ein Kraftfahrzeug mit einer Fußgängerschutzvorrichtung (26, 126) in Form eines Luftsackes, folgende Schritte aufweisend: Empfangen eines oder mehrere Aufprallsignale(s) (12, 112,62) von einem oder mehreren Aufprallsensor(en) (14, 114, 52); Empfangen eines oder mehrerer Fahrzeugparametersignale(s) (18, 118, 32, 132) von einem oder mehreren Fahrzeugparametersensor(en) (16, 116, 30, 130); Berechnen von Aufprallparametern aus den empfangenen Signalen (12, 112, 18, 118, 32, 132, 62) unter Einsatz von in einem Speicher abgelegten Bezugsdaten; Bestimmen, ob die Aufprallparameter einen Aufprall auf einen Fußgänger anzeigen, und, wenn ja, Ausgeben von Steueranweisungen (24, 124) zur Aktivierung der Fußgängerschutzvorrichtung (26, 126), worin die Steueranweisungen (24, 124) eine Funktion der berechneten Aufprallparameter sind und einen Verzögerungsbefehl zur Aktivierung der Fußgängerschutzvorrichtung (26, 126) enthalten, der sich mit der Fahrzeuggeschwindigkeit ändert,
**dadurch gekennzeichnet, daß** die Fußgängerschutzvorrichtung (26, 126) mit einer ersten Geschwindigkeit entfaltet wird, wenn die Fahrzeuggeschwindigkeit über einem ersten Geschwindigkeitsschwellenwert (S1), jedoch unter einer zweiten Geschwindigkeit (S2) liegt, und mit einer höheren Geschwindigkeit entfaltet wird, wenn die Fahrzeuggeschwindigkeit über der zweiten Geschwindigkeit (S2), jedoch unter einem dritten Geschwindigkeitsschwellenwert (S3) liegt.

2. Fußgängerschutzverfahren nach Anspruch 1, worin die im Speicher abgelegten Bezugsdaten den ersten Geschwindigkeitsschwellenwert (S1) beinhalten, unterhalb welchem die Fußgängerschutzvorrichtung (26, 126) nicht aktiviert wird, und den dritten Geschwindigkeitsschwellenwert (S3), oberhalb welchem die Fußgängerschutzvorrichtung (26, 126) nicht aktiviert wird, so daß die Fußgängerschutzvorrichtung (26, 126) nur dann aktiviert wird, wenn sich die Fahrzeuggeschwindigkeit zwischen der ersten und der zweiten Geschwindigkeitsschwelle (S1, S3) befindet, und die anderen Aufprallparameter einen Fußgängeraufprall anzeigen.

3. Fußgängerschutzverfahren nach Anspruch 1 oder Anspruch 2, worin die zweite Geschwindigkeit (S2) die Fahrzeuggeschwindigkeit ist, bei welcher die Verzögerungszeit kürzer als diejenige Zeit ist, die sonst zum vollständigen Entfalten der Aufprallschutzvorrichtung (26, 126) mit der ersten Entfaltungsgeschwindigkeit erforderlich wäre.

4. Fußgängerschutzverfahren nach einem beliebigen der Ansprüche 1 bis 3, worin die Verzögerung bei der ersten Entfaltungsgeschwindigkeit zwischen der ersten Geschwindigkeitsschwelle (S1) und der zweiten Geschwindigkeit (S2) mit der Fahrzeuggeschwindigkeit abnimmt, und die Verzögerung bei der höheren Entfaltungsgeschwindigkeit von der zweiten Geschwindigkeit (S2) bis zur dritten Schwellengeschwindigkeit (S3) mit der Fahrzeuggeschwindigkeit abnimmt.

5. Fußgängerschutzverfahren nach einem beliebigen der Ansprüche 1 bis 4, worin ein Aufprallsignal (12, 112, 62) empfangen wird, das von wenigstens einem an der Bugstoßstange des Fahrzeuges angebrachten Aufprallsensor (14, 114) kommt.

6. Fußgängerschutzverfahren nach einem beliebigen der Ansprüche 1 bis 5, worin ein von einem Geschwindigkeitssensor kommendes Geschwindigkeitssignal (18) empfangen wird, das die Geschwindigkeit anzeigt, mit welcher sich das Fahrzeug unmittelbar vor dem Aufprall bewegt.

7. Fußgängerschutzverfahren nach einem beliebigen der vorangehenden Ansprüche, worin Informationen über die Änderung der Fahrzeuggeschwindigkeit während des Aufpralles von einem Aufprallsensor (30, 130) empfangen werden.

8. Fußgängerschutzverfahren nach einem beliebigen der vorangehenden Ansprüche, worin wenigstens ein empfangenes Aufprallsignal (12, 112, 18, 118, 32, 132, 62) zeitabhängig ist.

9. Fußgängerschutzverfahren nach Anspruch 8, worin wenigstens ein Parameter dadurch berechnet wird, daß ein zeitabhängiges Aufprallsignal mit im Speicher abgelegten Aufpralleingangssignalen verglichen wird.

10. Fußgängerschutzverfahren nach Anspruch 9, worin eine oder mehrere Nachschlagetabelle(n) (22, 58) verwendet wird/werden, um eine Funktionsrelation zwischen den berechneten Aufprallparametern und den Steueranweisungen für die Aktivierung der Aufprallschutzvorrichtung (26, 126) zu bestimmen.

11. Fußgängerschutzanlage (1) für ein Kraftfahrzeug, folgendes aufweisend: eine Fußgängerschutzvorrichtung (26, 126) in Form eines Luftsackes; einen oder mehrere Aufprallsensor(en) (14, 114, 52); einen oder mehrere Fahrzeugparametersensor(en) (16, 116, 30, 130); Verarbeitungsmittel mit einem Speicher (20, 120, 26) mit darin abgelegten Bezugsdaten (22, 122, 58); und wenigstens einen mit dem Speicher (20, 120, 26) und besagten Sensoren (14, 114, 52, 16, 116, 30, 130) verbundenen Mikroprozessor (10, 110, 54), welcher in der Lage ist, Eingangssignale von besagten Sensoren zu empfangen, anhand der empfangenen Eingangssignale und unter Einsatz der gespeicherten Bezugsdaten Aufprallparameter zu berechnen und, wenn davon auszugehen ist, daß die Aufprallparameter einen Aufprall auf einen Fußgänger anzeigen, Steueranweisungen zur Aktivierung der Aufprallschutzvorrichtung (26, 126) auszugeben, so daß die Steueranweisungen eine Funktion der berechneten Aufprallparameter sind und einen Verzögerungsbefehl beinhalten, der sich mit der Fahrzeuggeschwindigkeit ändert und die Aktivierung der Fußgängerschutzvorrichtung verzögert;
**dadurch gekennzeichnet, daß** der Mikroprozessor (10, 110) so betreibbar ist, daß er die Fußgängerschutzvorrichtung (26, 126) mit einer ersten Geschwindigkeit entfaltet, wenn die Fahrzeuggeschwindigkeit über einer ersten Geschwindigkeitsschwelle (S1), aber unter einer zweiten Geschwindigkeit (S2) liegt, und mit einer höheren Geschwindigkeit entfaltet, wenn die Fahrzeuggeschwindigkeit über der zweiten Geschwindigkeit (S2), aber unter einer dritten Geschwindigkeitsschwelle (S3) liegt.

12. Fußgängerschutzanlage nach Anspruch 11, worin die Bezugsdaten die erste Geschwindigkeitsschwelle (S1) beinhalten, unterhalb welcher die Fußgängerschutzvorrichtung (26, 126) nicht aktiviert wird, und die dritte Geschwindigkeitsschwelle (S3), oberhalb welcher die Fußgängerschutzvorrichtung (26, 126) nicht aktiviert wird, so daß der Mikroprozessor (10, 110, 54) nur derart betreibbar ist, daß er Steueranweisungen für die Aktivierung der Fußgängerschutzvorrichtung (26, 126) nur dann ausgibt, wenn die Fahrzeuggeschwindigkeit zwischen dem ersten und dem zweiten Geschwindigkeitsschwellenwert (S1, S2) liegt, und die anderen Aufprallparameter einen Fußgängeraufprall anzeigen.

13. Fußgängerschutzanlage nach Anspruch 11 oder Anspruch 12, worin die zweite Geschwindigkeit (S2) diejenige Fahrzeuggeschwindigkeit ist, wo die Verzögerungszeit kürzer als der Zeitraum ist, der sonst erforderlich wäre, die Aufprallschutzvorrichtung (26, 126) mit der ersten Entfaltungsgeschwindigkeit vollständig zu entfalten.

## Revendications

1. Une méthode de protection de piéton pour un véhicule motorisé, comprenant un dispositif de protection de piéton (26, 126) sous la forme d'un sac gonflable comprenant les étapes de : recevoir un ou davantage de signaux d'impact (12, 112, 62) d'un ou plusieurs détecteurs d'impact (14, 114, 52) ; recevoir un ou davantage de signaux de paramètres de véhicule (18, 118, 32, 132) d'un ou plusieurs détecteurs de paramètres de véhicule (16, 116, 30, 130) ; calculer des paramètres d'impact à partir des signaux reçus (12, 112, 18, 118, 32, 132, 62) en utilisant des données de référence sauvegardées dans une mémoire ; déterminer si les paramètres de l'impact sont représentatifs d'un impact de piéton et, si c'est le cas, envoyer des instructions de commande (24, 124) pour déclencher le dispositif de protection de piéton (26, 126), dans laquelle les instructions de commande (24, 124) sont une fonction des paramètres d'impact calculés et comprennent une commande de retardement variant selon la vitesse du véhicule pour retarder le déclenchement du dispositif de protection de piéton (26, 126), **caractérisée en ce que** le dispositif de protection de piéton (26, 126) est déployé selon un premier taux lorsque la vitesse du véhicule est supérieure à une première limite de vitesse (S1) mais inférieure à une deuxième vitesse (S2) et est déployé selon un taux plus rapide lorsque la vitesse du véhicule est supérieure à la deuxième vitesse (S2) mais inférieure à une troisième limite de vitesse (S3).

2. Une méthode de protection de piéton selon la revendication 1, dans laquelle les données de référence sauvegardées dans la mémoire comprennent la première limite de vitesse (S1) en dessous de laquelle le dispositif de protection de piéton (26, 126) n'est pas déclenché et la troisième limite de vitesse (S3) au-delà de laquelle le dispositif de protection de piéton (26, 126) n'est pas déclenché, de manière à ce que le dispositif de protection de piéton (26, 126) ne soit déclenché que lorsque la vitesse du véhicule est située entre les première et deuxième limites (S1, S3) et les autres paramètres d'impact sont représentatifs d'un impact de piéton.

3. Une méthode de protection de piéton selon la revendication 1 ou la revendication 2, dans laquelle la deuxième vitesse (S2) est la vitesse du véhicule à laquelle la période de retardement est plus courte que la période de temps qui serait requise dans le cas contraire pour pleinement déployer le dispositif de protection de piéton (26, 126) selon le premier taux de déploiement.

4. Une méthode de protection de piéton selon l'une quelconque des revendications 1 à 3, dans laquelle le retard décroît selon la vitesse du véhicule pendant le premier taux d'inflation entre la première limite de vitesse (S2) et la deuxième vitesse (S2), et le retard décroît selon la vitesse du véhicule pendant le taux d'inflation plus élevé entre la deuxième vitesse (S2) et la troisième limite de vitesse (S3).

5. Une méthode de protection de piéton selon l'une quelconque des revendications 1 à 4, dans laquelle un signal d'impact (12, 112, 62) est reçu d'au moins un détecteur d'impact (14, 114) disposé sur le pare-chocs avant du véhicule.

6. Une méthode de protection de piéton selon l'une quelconque des revendications 1 à 5, dans laquelle un signal de vitesse (18) est reçu d'un détecteur de vitesse pour indiquer la vitesse à laquelle le véhicule se déplace immédiatement avant la collision.

7. Une méthode de protection de piéton selon l'une quelconque des revendications précédentes, dans laquelle les informations se rapportant au changement de la vitesse du véhicule pendant un impact sont reçues par un détecteur de collision (30, 130).

8. Une méthode de protection de piéton selon l'une quelconque des revendications précédentes, dans laquelle au moins un signal d'impact reçu (12, 112, 18, 118, 32, 132, 62) est temporel.

9. Une méthode de protection de piéton selon la revendication 8, dans laquelle au moins un paramètre d'impact est calculé en comparant un signal d'impact temporel avec des signaux d'impact temporels enregistrés dans la mémoire.

10. Une méthode de protection de piéton selon la revendication 9, dans laquelle une ou davantage de tables à consulter (22, 58) sont utilisées pour déterminer une relation fonctionnelle entre les paramètres d'impact calculés et les instructions de commande pour déclencher le dispositif de protection de piéton (26, 126).

11. Un appareil de protection de piéton (1) pour un véhicule motorisé, comprenant : un dispositif de protection de piéton (26, 126) sous la forme d'un sac gonflable ; un ou davantage de détecteurs d'impact (14, 114, 52) ; un ou davantage de détecteurs de paramètres de véhicule (16, 116, 30, 130) ; du matériel incluant une mémoire (20, 120, 26) contenant des données de référence (22, 122, 58) ; et au moins un microprocesseur (10, 110, 54) couplé avec la mémoire (20, 120, 26) et lesdits détecteurs (14, 114, 52, 16, 116, 30, 130), le microprocesseur (10, 110, 54) étant capable de recevoir des signaux en entrée à partir desdits détecteurs, de calculer des paramètres d'impact à partir des signaux reçus en entrée en utilisant les données de référence sauvegardées, et si les paramètres de l'impact sont représentatifs d'un impact de piéton, d'envoyer des instructions de commande pour déclencher le dispositif de protection de piéton (26, 126), dans lequel les instructions de commande sont une fonction des paramètres d'impact calculés et comprennent une commande de retardement qui varie selon la vitesse du véhicule pour retarder le déclenchement du dispositif de protection de piéton, **caractérisé en ce que** le microprocesseur (10, 110) fonctionne pour déployer le dispositif de protection de piéton (26, 126) selon un premier taux lorsque la vitesse du véhicule est supérieure à une première limite de vitesse (S1) mais inférieure à une deuxième vitesse (S2) et est déployé selon un taux plus rapide lorsque la vitesse du véhicule est supérieure à la deuxième vitesse (S2) mais inférieure à une troisième limite de vitesse (S3).

12. Un appareil de protection de piéton selon la revendication 11, dans lequel les données de référence comprennent la première limite de vitesse (S1) en dessous de laquelle le dispositif de protection de piéton (26, 126) n'est pas déclenché et la troisième limite de vitesse (S3) au-delà de laquelle le dispositif de protection de piéton (26, 126) n'est pas déclenché, de manière à ce que le microprocesseur (10, 110, 54) ne puisse fonctionner pour envoyer des instructions de commande afin de déclencher le dispositif de protection de piéton (26, 126) que lorsque la vitesse du véhicule est située entre les première et deuxième limites (S1, S3) et les autres paramètres d'impact sont représentatifs d'un impact de piéton.

13. Un appareil de protection de piéton selon la revendication 11 ou la revendication 12, dans laquelle la deuxième vitesse (S2) est la vitesse du véhicule à laquelle la période de retardement est plus courte que la période de temps qui serait requise dans le cas contraire pour pleinement déployer le dispositif de protection de piéton (26, 126) selon le premier taux de déploiement.
